(19) Europäisches Patentamt
European Patent Office
Office européen des brevets

(11) **EP 2 613 221 A2**

## (12) EUROPEAN PATENT APPLICATION

(43) Date of publication:
**10.07.2013 Bulletin 2013/28**

(51) Int Cl.:
*G06F 1/32* *(2006.01)*    *G06F 3/044* *(2006.01)*

(21) Application number: **13000050.8**

(22) Date of filing: **07.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 09.01.2012  US 201261584454 P
09.01.2012  US 201261584494 P
08.03.2012  US 201213415683

(71) Applicant: **Broadcom Corporation**
**Irvine, CA 92617 (US)**

(72) Inventors:
• **Li, Tianhao**
**Tustin, CA 92782 (US)**

• **Sobel, David**
**Los Altos, CA 94024 (US)**
• **Ranganathan, Sumant**
**Saratoga, CA 95070 (US)**
• **Walley, John**
**Ladera Ranch, CA 92694 (US)**
• **Joshi, Satish**
**Cupertino, CA 95014 (US)**
• **de Roche, Kerrynn**
**San Jose, CA 95124 (US)**
• **Kwon, Ohjoon**
**Irvine, CA 92603 (US)**

(74) Representative: **Jehle, Volker Armin**
**Bosch Jehle Patentanwaltsgesellschaft mbH**
**Flüggenstrasse 13**
**80639 München (DE)**

(54) **Fast touch detection in a mutual capacitive touch system**

(57)    A method for touch detection in a touch panel display includes entering a low power touch detection mode and intermittently stimulating the touch panel display with signals to determine if any touch event occurs without locating the touch event on the touch panel. If a touch event is detected, a full scan mode is entered to locate the touch event on the touch panel. This provides both faster touch detection and lower power operation for the touch panel display and controller circuit.

Figure 1

EP 2 613 221 A2

**Description**

**1. Cross-reference to Related Applications.**

The present application claims the benefit of the filing date under 35 U.S.C. § 119(e) of Provisional U.S. Patent Application Serial No. 61/584,454 filed January 9, 2012, the entire contents of which are incorporated herein by reference. Portions of this application relate to Provisional U.S. Patent Application Serial No. 61/584,494 filed January 9, 2012 and entitled Asymmetric Multi-Row Touch Panel Scanning, the entire contents of which are incorporated herein by reference.

**2. Technical Field / Background**

This disclosure relates to methods and apparatus for capacitive touch screen devices.

Continual development and rapid improvement in portable devices has included the incorporation of touch screens in these devices. A touch screen device responds to a user's touch to convey information about that touch to a control circuit of the portable device. The touch screen is conventionally combined with a generally coextensive display device such as a liquid crystal display (LCD) to form a user interface for the portable device. The touch screen also operates with a touch controller circuit to form a touch screen device. In other applications using touch sensing, touch pads may also be part of the user interface for a device such as a personal computer, taking the place of a separate mouse for user interaction with the onscreen image. Relative to portable devices that include a keypad, rollerball, joystick or mouse, the touch screen device provides advantages of reduced moving parts, durability, resistance to contaminants, simplified user interaction and increased user interface flexibility.

Despite these advantages, conventional touch screen devices have been limited in their usage to date. For some devices, current drain has been too great. Current drain directly affects power dissipation which is a key operating parameter in a portable device. For other devices, performance such as response time has been poor, especially when subjected to fast motion at the surface of the touch screen. Some devices do not operate well in environments with extreme conditions for electromagnetic interference and contaminants that can affect performance.

Further limitations and disadvantages of conventional and traditional approaches will become apparent to one of ordinary skill in the art through comparison of such approaches with aspects of the present disclosure as set forth in the remainder of this application and with reference to the accompanying drawings.

**3. Brief Summary of the Invention**

According to an aspect, a method is provided for touch detection in a touch panel, the method comprising:

entering a low power touch detection mode;
intermittently, stimulating the touch panel with signals to determine if any touch event occurs on the touch panel without locating the touch event on the touch panel; and
if a touch event is detected, entering a full scan mode to locate the touch event on the touch panel; otherwise,
if no touch event is detected, entering a low power idle mode for a predetermined time.

Advantageously, stimulating the touch panel display comprises:

during a first step scan, providing a first set of stimulus signals to a first portion of the touch panel; and
during a second step scan, providing a second set of stimulus signals to a second portion of the touch panel, the second set of stimulus signals being complementary to the first set of signals so that a touch event may be detected.

Advantageously, the method further comprises:

entering a low power touch detection mode, performing a baseline scan to obtain baseline capacitance values for each of the first step scan and the second step scan;
after each of the first step scan and the second step scan, comparing step scan capacitance values due to the respective stimulus signals with the baseline capacitance values; and
determining if a touch event is detected based on the comparison.

Advantageously, stimulating the touch panel display comprises:

providing the first set of stimulus signals and the second set of stimulus signals along respective predetermined rows of the touch panel;

sensing signals indicative of capacitance along columns of the touch panel; and

based on the sensed signals, determining if a touch event is detected.

Advantageously, duration of the low power idle mode is selectable to balance power dissipation and response time to a touch event.

According to an aspect, a method for a touch panel is provided, the method comprising:

when no touch activity is detected for the touch panel, periodically performing a touch detection scan of the touch panel; and

when the touch detection scan produces an indication of touch activity, performing a full scan of the touch panel to locate the position of the touch activity on the touch panel.

Advantageously, the method further comprises:

when no touch activity has been detected for a predetermined period of time, entering a touch detection mode of operation; and

when in the touch detection mode of operation, if a new indication of touch activity is detected, exiting the touch detection mode.

Advantageously, performing a touch detection scan comprises:

providing respective complementary stimulus signals to respective complementary partitions of the touch panel; and

detecting a signal variation due to the provided complementary stimulus signals.

Advantageously, the method further comprises:

providing a first stimulus signal to rows of a first partition of the touch panel;

providing a second stimulus signal to rows of a second partition of the touch panel, the second stimulus signal being complementary to the first stimulus signal and the second partition being complementary to the first partition; and

detecting signals indicative of capacitance along respective columns of the touch panel.

Advantageously, the method further comprises:

subtracting a baseline capacitance value for each respective column from the detected signals indicative of capacitance along the respective columns of the touch panel; and

in response to a non-zero difference, producing an indication of touch activity.

Advantageously, the period for performing the touch detection scan of the touch panel is selectable to balance power dissipation and response time to touch activity on the touch panel.

According to an aspect, a touch panel controller circuit comprises:

an analog front end to stimulate selected rows of a touch panel and sense panel response to the stimulation; and

a scan controller coupled with the analog front end and configured to control the analog front end to periodically stimulate predetermined rows of the touch panel with a touch detection scan procedure and, in response to an indication of no touch activity, enter low power mode and intermittently stimulate the predetermined rows of the touch panel with subsequent touch detection scans until a touch activity has been detected.

Advantageously, the scan controller is further configured to respond to detection of activity by controlling the analog front end to stimulate all rows of the touch panel to locate the touch activity on the touch panel.

Advantageously, the touch pad controller circuit further comprises stored data to control the scan controller to identify as the predetermined rows of the touch panel a first partition having a first subset of rows of the touch panel and a second partition having a second subset of rows of the touch panel, the first subset of rows and the second subset of rows being selected to ensure that all areas of the touch panel are stimulated during the touch detection scan procedure.

Advantageously, the analog front end is responsive to the scan controller to provide first stimulus signals to a first subset of rows of the touch panel and provide second stimulus signals to a second subset of rows of the touch panel.

Advantageously, the analog front end is configured to sense signals produced on columns of the touch panel in response to the first stimulus signals and the second stimulus signals.

Advantageously, the analog front end comprises analog to digital converter circuits to produce digital data based on the sensed signals and further comprising a circuit to subtract baseline capacitance data from the produced digital data to detect touch activity on the touch panel.

Advantageously, the analog front end is responsive to the scan controller to provide a second stimulus signal that is complementary to the first stimulus signal so that the simultaneous provision of the first stimulus signal and second stimulus signal produce substantially no variation from a baseline level unless a touch activity is present on the touch panel.

Advantageously, the touch panel is arranged in a predetermined number of rows and a predetermined number of columns and wherein the scan controller is configured to determine touch panel partitioning and touch panel driving patterns based on the predetermined number of rows and the predetermined number of columns.

## 4. Brief Description Of The Drawings

The system may be better understood with reference to the following drawings and description. In the figures, like reference numerals designate corresponding parts throughout the different views.

Figure 1 is a block diagram of an exemplary portable device.

Figure 2 is a top view of an exemplary portable device.

Figure 3 is a simplified diagram of an exemplary mutual capacitance touch panel for use in the portable device of Figures 1 and 2.

Figure 4 shows an exemplary block diagram of the touch front end of the portable device of Figure 1.

Figure 5 shows an exemplary first sample scan map.

Figure 6 shows an exemplary second sample scan map.

Figure 7 shows an exemplary high-level architecture of the touch front end of the portable device of Figure 1.

Figure 8 shows a simplified capacitive touch panel and related circuitry.

Figure 9 illustrates an exemplary baseline tracking filter for use in a controller circuit for a portable device.

Figure 10 shows a second variance estimator in conjunction with the baseline tracking filter of Figure 9;

Figure 11 shows a second variance estimator in conjunction with the baseline tracking filter of Figure 9.

Figure 12 shows a timing diagram for a touch detection mode of operation for the portable device of Figure 1.

Figure 13 is a flow diagram illustrating the touch detection mode of operation of the portable device of Figure 1.

Figure 14 shows touch detection scanning of a sample scan map of the portable device of Figure 1.

## 5. Detailed Description

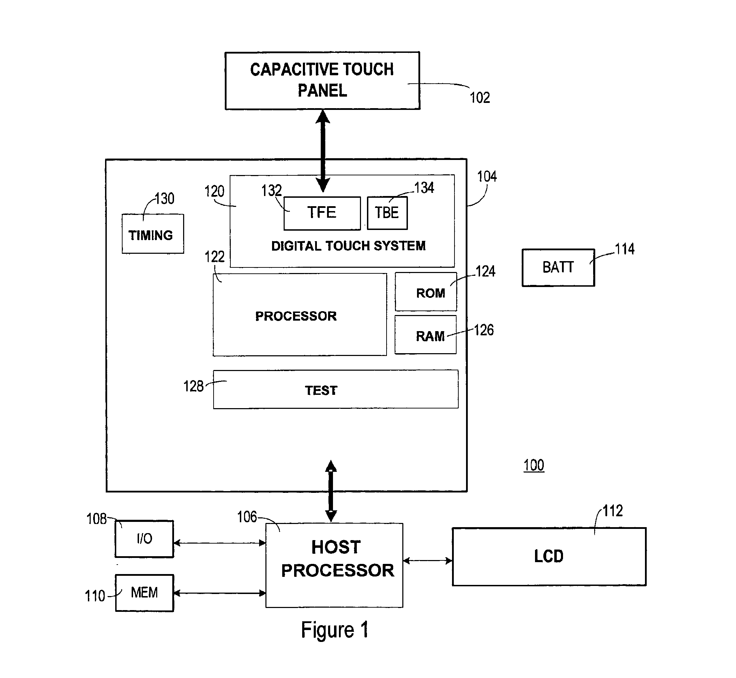

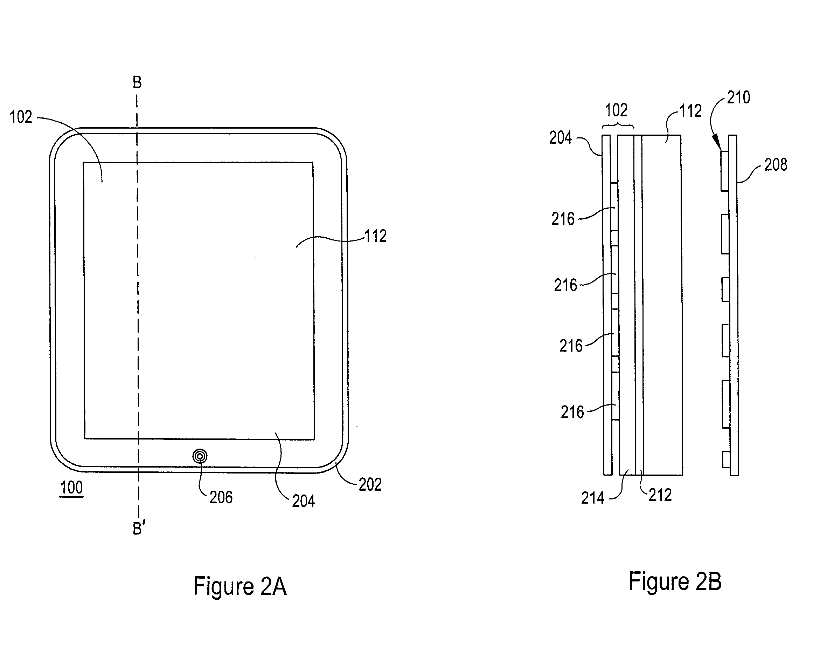

Referring now to Figures 1 and 2, Figure 1 shows a block diagram of a portable device 100. Figure 2 one embodiment of a portable device 100 according to the block diagram of Figure 1. As shown in Figure 1, the portable device 100 includes a capacitive touch panel 102, a controller circuit 104, a host processor 106, input-output circuit 108, memory 110, a liquid crystal display (LCD) 112 and a battery 114 to provide operating power.

Figure 2 includes Figure 2A which shows a top view of the portable device 100 and Figure 2B which shows a cross-sectional view of the portable device 200 along the line B-B' in Figure 2A. The portable device may be embodied as the widest variety of devices including as a tablet computer, a smart phone, or even as a fixed device with a touch-sensitive surface or display..

The portable device 100 includes a housing 202, a lens or clear touch surface 204 and one or more actuatable user interface elements such as a control switch 206. Contained within the housing are a printed circuit board 208 circuit elements 210 arranged on the printed circuit board 208 and as are shown in block diagram form in Figure 1. The capacitive touch panel 102 is arranged in a stack and includes a drive line 212, an insulator 214 and a sense line 216. The insulator electrically isolates the drive line 212 and other drive lines arranged parallel to the drive line from the sense lines 216. Signals are provided to one or more of the drive lines 212 and sensed by the sense lines 216 to locate a touch event on the clear touch surface 204. The LCD 112 is located between the printed circuit board 208 and the capacitive touch panel 102.

As is particularly shown in Figure 2A, the capacitive touch panel 102 and the LCD 112 may be generally coextensive and form a user interface for the portable device. Text and images may be displayed on the LCD for viewing and interaction by a user. The user may touch the capacitive touch panel 102 to control operation of the portable device 100. The touch may be by a single finger of the user or by several fingers, or by other portions of the user's hand or other body parts. The touch may also be by a stylus gripped by the user or otherwise brought into contact with the capacitive touch panel. Touches may be intentional or inadvertent. In another application, the capacitive touch panel 102 may be embodied as a touch pad of a computing device. In such an application, the LCD 112 need not be coextensive (or co-located) with the capacitive touch panel 102 but may be located nearby for viewing by a user who touches the capacitive touch panel 102 to control the computing device.

Referring again to Figure 1, the controller circuit 104 includes a digital touch system 120, a processor 122, memory including non-volatile memory 124 and read-write memory 126, a test circuit 128 and a timing circuit 130. In one embodiment, the controller circuit 104 is implemented as a single integrated circuit including digital logic and memory and analog functions. Other embodiments may include other components or functional blocks in the controller circuit 104.

The digital touch subsystem 120 includes a touch front end (TFE) 132 and a touch back end (TBE) 134. This partition is not fixed or rigid, but may vary according to the high-level function(s) that each block performs and that are assigned or considered front end or back end functions. The TFE 132 operates to detect the capacitance of the capacitive sensor that comprises the capacitive touch-panel 102 and to deliver a high signal to noise ratio (SNR) capacitive image (or heatmap) to the TBE 134. The TBE 134 takes this capacitive heatmap from the TFE 132 and discriminates, classifies, locates, and tracks the object(s) touching the capacitive touch panel 102 and reports this information back to the host processor 106. The TFE 132 and the TBE 134 may be partitioned among hardware and software or firmware components as desired, e.g., according to any particular design requirements. In one embodiment, the TFE 132 will be largely implemented in hardware components and some or all of the functionality of the TBE 134 may be implemented by the processor 122.

The processor 122 operates in response to data and instructions stored in memory to control the operation of the controller circuit 104. In one embodiment, the processor 122 is a reduced instruction set computer (RISC) architecture, for example as implemented in an ARM processor available from ARM Holdings. The processor 122 receives data from and provides data to other components of the controller circuit 104. The processor 122 operates in response to data and instructions stored in the non-volatile memory 124 and read-write memory 126 and in operation writes data to the memories 124, 126. In particular, the non-volatile memory 124 may store firmware data and instructions which are used by any of the functional blocks of the controller circuit 104. These data and instructions may be programmed at the time of manufacture of the controller 104 for subsequent use, or may be updated or programmed after manufacture.

The timing circuit 130 produces clock signals and analog, time-varying signals for use by other components of the controller circuit 104. The clock signals include digital clock signals for synchronizing digital components such as the processor 122. The time-varying signals include signals of predetermined frequency and amplitude for driving the capacitive touch panel 102. In this regard, the timing circuit 130 may operate under control or responsive to other functional blocks such as the processor 122 or the non-volatile memory 124.

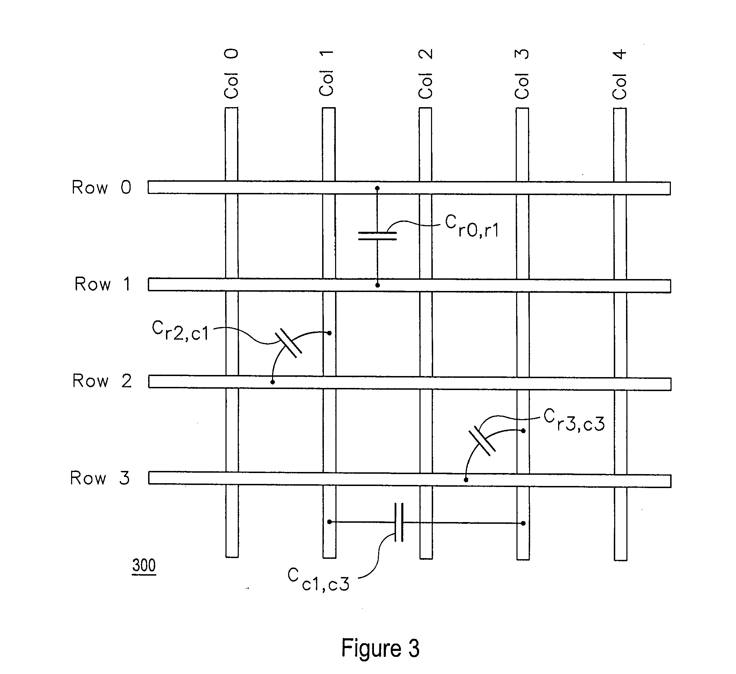

Figure 3 shows a diagram of a typical mutual capacitance touch panel 300. The capacitive touch panel 300 models the capacitive touch panel 102 of the portable device of Figures 1 and 2. The capacitive touch panel 300 has $N_{row}$ rows and $N_{col}$ columns ($N_{row}$=4, $N_{col}$=5 in Figure 3). In this manner, the capacitive touch panel 300 creates $N_{row}$-times-$N_{col}$ mutual capacitors between the $N_{row}$ rows and the $N_{col}$ columns. These are the mutual capacitances that the controller circuit 104 commonly uses to sense touch, as they create a natural grid of capacitive nodes that the controller circuit 104 uses to create the typical capacitive heatmap. However, it is worth noting that there are a total of ($N_{row}$ + $N_{col}$)-or ($N_{row}$ + $N_{col}$ +2) nodes if a touching finger or stylus and ground node in the capacitive touch panel 300 are included. A capacitance exists between every pair of nodes in the capacitive touch panel 300.

Stimulus modes

The capacitive touch panel 300 can be stimulated in several different manners. The way in which the capacitive touch panel 300 is stimulated impacts which of the mutual capacitances within the panel are measured. A list of the modes of operation is detailed below. Note that the modes defined below only describe the manner in which the TFE 132 stimulates the panel.

Row-column (RC) mode is a first operating mode of a mutual capacitive sensor. In RC mode, the rows are driven with transmit (TX) waveforms and the columns are connected to receive (RX) channels of the TFE 132. Therefore, the mutual capacitors between the rows and the columns are detected, yielding the standard $N_{row}$ x $N_{col}$ capacitive heatmap. In the example shown in Figure 3, RC mode measures the capacitors labeled $Cr_{<i>}, C_{<j>}$, where <i> and <j> are integer indices of the row and column, respectively. Generally, there is no incremental value in supporting column-row (CR) mode, (e.g. driving the columns and sensing the rows), as it yields the same results as RC mode.

Self-capacitance column (SC) mode is a self-capacitance mode that may be supported by the controller 102. In SC mode, one or more columns are simultaneously driven and sensed. As a result, the total capacitance of all structures connected to the driven column can be detected.

In column-listening (CL) mode, the RX channels are connected to the columns of the capacitive touch panel 102 and the transmitter is turned off. The rows of the capacitive touch panel 102 will either be shorted to a low-impedance node (e.g. AC ground), or left floating (e.g. high-impedance). This mode is used to listen to the noise and interference present on the panel columns. The output of the RX channels will be fed to a spectrum estimation block (e.g. FFT block) in order to determine the appropriate signal frequencies to use and the optimal interference filter configuration, as will be described in further detail below.

Timing Terminology

Some terminology is introduced for understanding the various timescales by which results are produced within the TFE 132. The TFE 132 produces a capacitive heatmap by scanning all desired nodes of the capacitive touch panel 102 (e.g., all of the nodes, or some specified or relevant subset of all of the nodes). This process may be referred to as a frame scan; the frame scan may run at a rate referred to as the frame rate. The frame rate may be scalable. One exemplary frame rate include a frame rate of 250Hz for single touch and a panel size less than or equal to 5.0 inches in size. A second exemplary frame rate is 200Hz for single touch and a panel size greater than 5.0 inches. A third exemplary frame rate is 120Hz minimum for 10 touches and a panel size of 10.1 inches. Preferably, the controller 104 can support all of these frame rates and the frame rate is configurable to optimize tradeoff of performance and power consumption for a given application. The term scan rate may be used interchangeably with the term frame rate.

The controller circuit 104 may assemble a complete frame scan by taking a number of step scans. Qualitatively, each step scan may result in a set of capacitive readings from the receivers, though this may not be strictly done in all instances. The controller circuit 104 may perform each step scan at the same or different step rate. For a row/column (RC) scan, where the transmitters are connected to the rows and the receivers are connected to the columns, it will take $N_{row}$ step scans to create a full frame scan. Assuming a tablet-sized capacitive touch panel 102 with size 40 rows x 30 columns, the step rate may be at least 8 kHz to achieve a 200Hz frame rate.

For all mutual-capacitance scan modes a touch event causes a reduction in the mutual capacitance measured. The capacitive heatmap that is created by the TFE 132 will be directly proportional to the measured capacitance. Therefore, a touch event in these scan modes will cause a reduction in the capacitive heatmap. For all self-capacitance scan modes, a touch event causes an increase in the capacitance measured. The capacitive heatmap that is created by the TFE 132 will be directly proportional to the measured capacitance. Therefore, a touch event in these scan modes will cause a local increase in the capacitive heatmap.

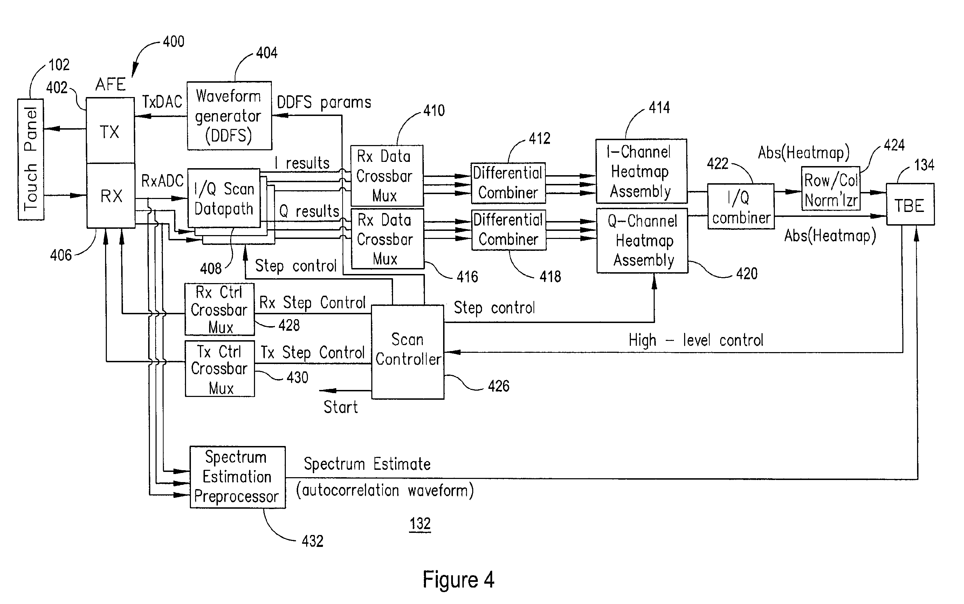

Referring now to Figure 4, it shows a block diagram of the touch front end (TFE) 132 of Figure 1. In the illustrated embodiment, the AFE 132 includes 48 physical transmit channels and 32 physical receive channels. Additionally, some embodiments of the AFE 132 may contain circuitry such as power regulation circuits, bias generation circuits, and clock generation circuitry. To avoid unduly crowding the drawing figure, such miscellaneous circuitry is not shown in Figure 4.

The TFE 132 includes transmit channels 402, a waveform generation block 404, receive channels 406 and I/Q scan data paths 408. The transmit channels 402 and the receive channels 406 collectively may be referred to as the analog front end (AFE) 400. The TFE 132 further includes, for the in-phase results from the I/Q scan data path, a receive data crossbar multiplexer 410, a differential combiner 412 and an in-phase channel assembly block 414. Similarly for the quadrature results, the TFE 132 includes a receive data crossbar multiplexer 416, a differential combiner 418 and an in-phase channel assembly block 420. The in-phase results and the quadrature results are combined in an I/Q combiner 422. The absolute value of the data is provided to a row and column normalizer 424 and then made available to the touch back end (TBE) 134. Similarly, the heatmap phase information from the I/Q combiner 422 is provided to the TBE 134 as well.

The TFE 132 further includes a scan controller 426, read control crossbar multiplexer 428 and transmit control crossbar multiplexer 430. Further, the TFE 132 includes a spectrum estimation processor 426 as will be described below in further detail. The spectrum estimation processor 426 provides a spectrum estimate to the TBE 134. The scan controller 426 receives high level control signals from the TBE 134 to control which columns are provided with transmit signals and which rows are sensed.

The receive data crossbar multiplexers 410, 416 and the receive control crossbar multiplexer 428 together form a receive crossbar multiplexer. These two multiplexers are used to logically remap the physical receive TFE channels by remapping both their control inputs and data outputs. As such, the control signals routed to both multiplexers may be identical, as the remapping performed by the receive data multiplexers 410, 416 and the receive control multiplexer 428 needs to be identical.

The receive data crossbar multiplexers 410, 416 sit between the output of the I/Q scan data path 408 and the heatmap assembly blocks 414, 420. The purpose of the receive data crossbar multiplexers 410, 416 is to enable the logical remapping of the receive channels. This in turn allows for logical remapping of the electrical connectors such as pins or balls which connect the integrated circuit including the controller 104 to other circuit components of the portable device 100. This will in turn enable greater flexibility in routing a printed circuit board from the integrated circuit including the controller 104 to the capacitive touch panel 102.

Since the I/Q scan data path 408 outputs complex results, the receive crossbar multiplexer may be able to route both the I and Q channels of the scan data path output. This can easily be achieved by instantiating two separate and identical crossbar multiplexers 410, 416. These two multiplexers will share the same control inputs.

The receive control crossbar multiplexer 428 sits between the scan controller 426 and the AFE 400. It is used to remap the per-channel receive control inputs going into the AFE 400. The structure of the receive control crossbar multiplexer 428 may be the same as for the receive data crossbar multiplexers 410, 416.

Since the Rx Ctrl crossbar is used in conjunction with the Rx Data crossbar to logically remap the RX channels, it may be programmed in conjunction with the Rx data crossbar. The programming of the receive control multiplexer 428 and the receive data crossbar multiplexers 410, 416 are not identical. Instead the programming may be configured so that the same AFE to controller channel mapping achieved in one multiplexer is implemented in the other.

The scan controller 426 forms the central controller that facilitates scanning of the capacitive touch panel 102 and processing of the output data in order to create the capacitive heatmap. The scan controller 426 operates in response to control signals from the TBE 134.

Scan Controller modes of operation

The scan controller 426 may support many different modes. A brief description of each mode is listed below. Switching between modes is typically performed at the request of the processor 122 (Figure 1), with a few exceptions noted below.

Active scan mode is considered the standard mode of operation, where the controller 104 is actively scanning the capacitive touch panel 102 in order to measure the capacitive heatmap. Regardless of what form of panel scan is utilized, the scan controller 426 steps through a sequence of step scans in order to complete a single frame scan.

In single-frame mode, the controller initiates one single frame scan at the request of the processor 122. After the scan is complete, the capacitive heatmap data is made available to the processor 122 and the scan controller 426 suspends further operation until additional instructions are received from the processor 426. This mode is especially useful in chip debugging.

In single-step mode, the controller initiates one single step scan at the request of the processor 122. After the scan is complete, the outputs of the scan data path 408 are made available to the processor 122 and the scan controller 426 suspends further operation until additional instructions are received from the processor 122. This mode is especially useful in chip testing and debugging.

Idle scan mode is a mode initiated by the processor 122 in order to run the controller 104 in a lower-performance mode. Typically, this mode will be selected when the controller 122 does not detect an active touch on the screen of the capacitive touch panel 102, but still wants reasonably fast response to a new touch. Therefore, the controller 122 is still active and capable of processing the heatmap data produced by the TFE 132.

The primary differences between active scan mode and idle scan mode are twofold. First, the frame rate in idle scan mode will typically be slower than that used in active scan mode. Duty cycling of the AFE 400 and other power reduction modes will be used in order to reduce total power consumption of the controller 104 during idle scan. Second, the length of time used to generate a single frame scan may be shorter in idle scan mode than in active scan mode. This may be achieved by either shortening the duration of a step scan or by performing fewer step scans per frame. Reducing total frame scan time can further reduce power at the expense of reduced capacitive heatmap signal to noise ratio (SNR).

Spectrum estimation mode is used to measure the interference and noise spectrum coupling into the receive channels. This measurement is then analyzed by the processor 122 to determine the appropriate transmit frequency and calculate the optimal filter coefficients for the filters within the scan data path 408. This mode is typically used with the Column Listening mode.

In spectrum estimation mode, most of the blocks of the TFE 132 in Figure 4 are disabled. The scan controller 426, the AFE 400, and the spectrum estimation preprocessor 432 may be used. The transmit channel 402 of the AFE 400 is powered down, and the receive channel 406 of the AFE 400 records the background noise and interference signals that couple into the capacitive touch panel 102. The receive data from all of the channels of the AFE 400 are routed to the spectrum estimation preprocessor 432, which performs mathematical preprocessing on this data. The output of the spectrum estimation preprocessor 432 will be an N-point vector of 16-bit results, where N is approximately 200. The output of the spectrum estimation preprocessor 432 is handed off to the processor 122 for further analysis and determination of the appropriate transmit frequency to use. This process is described in greater detail below.

In addition to the functional modes described above, the controller 104 may have a set of sleep modes, where various functional blocks in the controller 104 are disabled and/or powered down completely.

A frame scan includes of a series of step scans. The structure of each step scan may be identical from step scan to the next within a given frame scan; however, the exact values of control data vary from step scan to step scan. Furthermore, the operation of a given frame scan may be determined by configuration parameters and may or may not affected by data values measured by the receive channel. One example of the frame scan logic that the controller circuit 104 may implement is shown below.

```
// Initialization
 Set DDFS parameters;
 Clear heatmap_memory;

 // Step scan loop
 For step_idx = 1 to num_step_scans {

    // Configure circuits according to step_idx
    Set scan_datapath_control to scan_datapath_parameters[step_idx];
    Assert Rx_reset and wait TBD clock cycles;
```

```
    Set AFE_control_inputs to AFE_parameters[step_idx];
    Deassert Rx_reset and wait TBD clock cycles;

  // Run step scan and collect data
  Send start signal to DDFS and scan data path;
 Wait for TBD clock cycles for step scan to complete;
  Pass datapath_results[step_idx] to heatmap assembly block

  // Incremental heatmap processing
} // step_idx loop
```

The incremental heatmap processing operation is described in greater detail below.

Multi-transmit Support and Block Stimulation of the Panel

In order to achieve improved SNR in the capacitive heatmap, the controller circuit 104 provides support for multi-transmit (multi-Tx) stimulation of the capacitive control panel 102. Multi-Tx stimulation (or Multi-Tx) means that multiple rows of the panel are simultaneously stimulated with the transmit (Tx) signal, or a polarity-inverted version of the Tx signal, during each step scan. The number and polarity of the rows stimulated may be controlled through control registers in the AFE 400. The number of rows simultaneously stimulated during multi-Tx is defined as a parameter $N_{multi}$. $N_{multi}$ may be a constant value from step-to-step within a given frame and also from frame-to-frame.

If $N_{multi}$ rows are simultaneously stimulated during a step scan, it will take at least $N_{multi}$ step scans to resolve all the pixel capacitances being stimulated. Each receiver has $N_{multi}$ capacitances being stimulated during a scan step. Hence there are $N_{multi}$ unknown capacitances, requiring at least $N_{multi}$ measurements to resolve these values. During each of these $N_{multi}$ steps, the polarity control of the Tx rows will be modulated by a set of Hadamard sequences. Once this set of $N_{multi}$ (or more) step scans is complete, the next set of $N_{multi}$ rows can be stimulated in the same fashion, as $N_{multi}$ will almost always be less than the number of actual rows in the capacitive touch panel 102.

In this way, the processing of the entire capacitive touch panel 102 occurs in blocks, where $N_{multi}$ rows of pixels are resolved during one batch of step scans, and then the next $N_{multi}$ rows of pixels are resolved in the next batch of step scans, until all the panel rows are fully resolved.

In most scenarios, the number of panel rows will not be an exact multiple of $N_{multi}$. In these situations, the number of rows scanned during the final block of rows will be less than $N_{multi}$. However, $N_{multi}$ scan steps may be performed on these remaining rows, using specified non-square Hadamard matrices.

Differential Scan Mode

Differential scan mode is an enhancement to normal scanning mode, whereby the frame scan operation is modified to exploit the correlation of the interference signal received across adjacent receive channels. In this mode, the normal frame scan methodology is performed; however the number of step scans used to assemble a single frame is doubled. Conceptually, each step scan in the scan sequence becomes two step scans: the first is a single-ended or normal step scan with the default values for the AFE control registers, and the second is a differential step scan.

Given $N_{RX}$ receive channels, the differential scan mode yields a total of $2N_{RX}$ receiver measurements per aggregate scan step. (e.g. $N_{RX}$ single-ended measurements and $N_{RX}$ differential measurements.) These $2N_{RX}$ measurements are recombined and collapsed into $N_{RX}$ normal measurements in the Differential Combiner block 412, 418 shown in Figure 4.

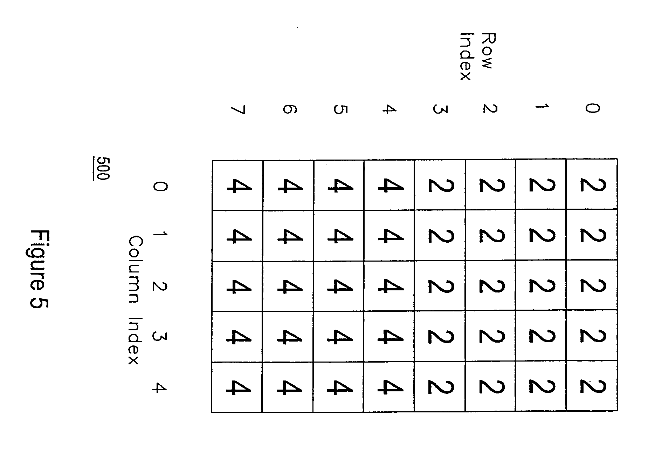

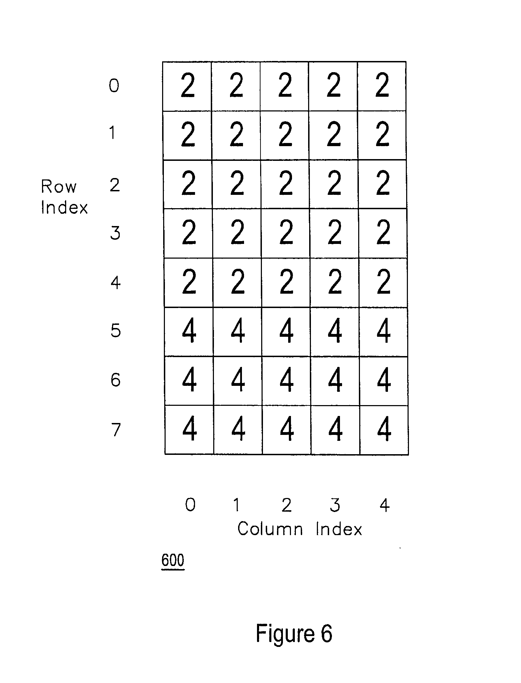

Figures 5 and 6 show examples of asymmetric scan maps 500 and 600.

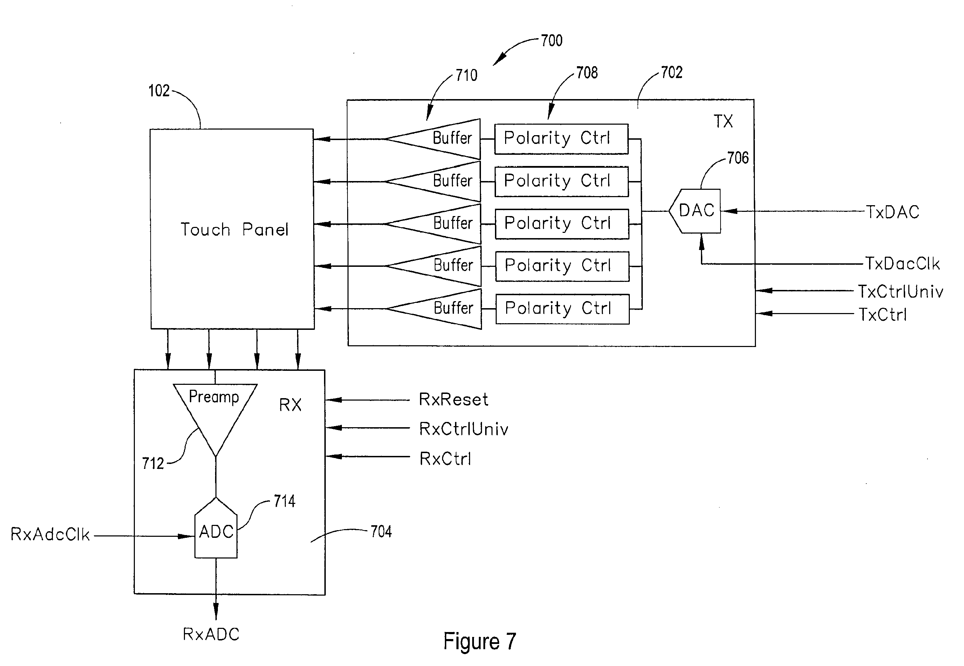

Figure 7 shows a high-level architecture 700 of the analog front end. The architecture 700 includes a transmit channel 702 providing signals to columns of the capacitive touch panel 102 and a receive channel 704 sensing signals from the capacitive touch panel 102. The transmit channel 702 includes a digital to analog converter 706, polarity control circuits 708 and buffers 710. The receive channel 704 includes a pre-amplifier 712 and analog to digital converter 714.

All transmit channels may be driven by a shared transmit data signal labeled TxDAC in Figure 7. Each physical transmit channel may also receive a common transmit digital to analog converter clock signal, labeled TxDacClk, to drive the transmit digital to analog converter 706. The clock signal will come directly from a frequency locked loop block within the TFE 132, and this clock signal will also be routed to the digital portion of the TFE 132.

Each physical transmit channel may also have its own set of channel-specific TxCtrl bits that appropriately control various parameters of the transmit channel, such as enable/disable, polarity control, and gain/phase control). These TxCtrl bits are not updated at the TxDacClk rate, but rather are updated between subsequent step scans during the frame scan operation.

A control signal controls the transmit polarity of each of the 48 transmit channels. As will be described in greater detail below, the polarity of the transmit outputs may be modulated in an orthogonal sequence, with each transmit output having a fixed polarity during each scan step during a frame scan.

All receive channels will receive a set of common clock signals. These clock signals are provided directly from a frequency locked loop block within the TFE 132, and this clock signal is also routed to the digital portion of the TFE 132. The clock signals routed to the RX channels include the signal RxADCClk which drives the RxADC. A typical clock frequency for this signal is 48MHz.

Each physical receive channel will also have its own set of channel-specific receive control bits, labeled RxCtrl in Figure 7, that appropriately control various parameters of the receive channel, such as enable/disable and gain control. These receive control bits are updated between subsequent step scans during the frame scan operation.

Additionally, there may be a shared set of control settings, labelled RxCtrlUniv in Figure 7, that will control all receive channels simultaneously. These registers are primarily composed of generic control bits that will remain constant for a given implementation of the controller 104.

There are also one or more reset lines labeled RxReset that are common to all reset channels. These reset lines may be asserted in a repeatable fashion prior to each scan step.

Waveform Generation

The waveform generation block (WGB) 404 in Figure 4 generates the transmit waveform for the TX channels 402. The WGB 404 generates a digital sine wave. Additionally, WGB 404 may generate other simple periodic waveforms; such as square waves having edges with programmable rise and fall times.

The primary output of the WGB 404 is the data input to the transmit channels 402 labelled TxDAC in Figure 4. The WGB 404 receives as input signals a clock signal labelled TxDacClk and a signal labelled Start in Figure 4. Upon receiving the Start signal from the scan controller 426, the WGB 404 begins producing digital waveforms for the duration of a single step scan. At the conclusion of the step scan, the WGB 404 ceases operation and waits for the next start signal from the scan controller 426.

The WGB 404 may have some amount of amplitude control, but the WGB 404 will typically be operated at maximum output amplitude. Therefore, the performance requirements listed below only need to be met at max output amplitude. All signal outputs may be in two's complement format. The WGB 404 may also provide arbitrary sine/cosine calculation capabilities for the scan data path 408 and spectrum estimation preprocessor 432.

The following table lists typical performance for the WGB 404.

| Specification | Min | Nom | Max | Comment |
|---|---|---|---|---|
| **Clock rate** | | 8MHz | | Will operate at TxDacClk rate |
| **Output frequency** | 0 Hz | - | 2 MHz | |
| **Frequency ctrl resolution** | - | 15 bits | - | Desired resolution of ~61Hz. Can be different. |
| **# of output bits** | - | 8 | - | |
| **Output amplitude** | 50% amplitude | 100% amplitude | 100% amplitude | |
| **Amplitude ctrl resolution** | - | 7 bits | - | Corresponds to 1% stepsize in amplitude control. |
| **DC bias control** | 0 | 0 | 0 | All outputs should be balanced around 0 |
| **Output THD** | | | -40dBFs | Sine wave mode only |
| **Rise/fall time** | 1 calk cycle @ 8MHz | - | 256 calk cycles @ 8MHz | Square-wave mode only. Independent control of rise time vs. fall time NOT required. |

In Figure 4, the differential combiner blocks 412, 410 provide the capability to operate in differential mode, where the receive channels 406 alternate step scans between single-ended measurements and differential measurements. The purpose of the differential combiner blocks 412, 418 is to combine the $N_{RX}$ single-ended measurements and $(N_{RX} -1)$ differential measurements into a single set of $N_{RX}$ final results for use in the heatmap assembly blocks 414, 420 that follow.

The differential combiner blocks 412, 418 are akin to a spatial filter. Let the vector, **c**, be an $N_{rx}$-by-1 vector of the capacitances to estimate. In differential mode, you have a vector, s, of single-ended measurements and a vector, d, of differential measurements. Hence, an estimate of c, called **c**$_{est}$, is sought by optimally recombining s and d. Determining the optimal recombination requires substantial computation, but simulations have shown that the following recombination scheme works to within roughly 0.5dB of optimal performance over the expected range of operating conditions:

$$c_{est,n} = a_1 \cdot s_{n-2} + a_2 \cdot s_{n-1} + a_3 \cdot s_n + a_2 \cdot s_{n+1} + a_1 \cdot s_{n+2} + b_1 \cdot d_{n-1} + b_2 \cdot d_n - b_2 \cdot d_{n+1} - b_1 \cdot d_{n+2}$$

where the subscript n indicates result from the $n^{th}$ receiver channel, and $0 \le n \le N_{RX}-1$.

Furthermore, the coefficients are subject to the following constraints:

$$0 \le a_1, a_2, a_3 \le 1$$

$$a_3 = 1 - 2a_1 - 2a_2$$

$$b_1 = a_1$$

$$b_2 = a_1 + a_2$$

Given these constraints, it can be observed that the math operation listed above can be collapsed into two multiplication operations:

$$c_{est,n} = s_n + a_1 \cdot \left( s_{n-2} - 2s_n + s_{n+2} + d_{n-1} + d_n - d_{n+1} - d_{n+2} \right) + a_2 \cdot \left( s_{n-1} - 2s_n + s_{n+1} + d_n - d_{n+1} \right)$$

The equations above assume that the data exists for 2 receivers on either side of the nth receiver. (e.g. $2 \le n \le N_{RX}-3$) Therefore, the equations above may be modified for the two outer edge receive channels on either side. The modifications are quite simple. First, replace any non-existent $s_k$ term with the nearest neighboring $s_j$ term that does exist. Second, replace any non-existent $d_k$ term with 0. Putting these rules together and expressing the mathematics in matrix form, we get:

$$c_{est} = \begin{bmatrix} a_1+a_2+a_3 & a_2 & a_1 & 0 & 0 & -b_2 & -b_1 & 0 & 0 \\ a_1+a_2 & a_3 & a_2 & a_1 & 0 & b_2 & -b_2 & -b_1 & 0 \\ a_1 & a_2 & a_3 & a_2 & a_1 & b_1 & b_2 & -b_2 & -b_1 \\ \vdots & \vdots & \vdots & \vdots & \vdots & \vdots & \vdots & \vdots & \vdots \\ a_1 & a_2 & a_3 & a_2 & a_1 & b_1 & b_2 & -b_2 & -b_1 \\ 0 & a_1 & a_2 & a_3 & a_2+a_1 & 0 & b_1 & b_2 & -b_2 \\ 0 & 0 & a_1 & a_2 & a_3+a_2+a_1 & 0 & 0 & b_1 & b_2 \end{bmatrix} \cdot \begin{bmatrix} s_0 \\ \vdots \\ s_{N_{RX}-1} \\ d_1 \\ \vdots \\ d_{N_{RX}-1} \end{bmatrix}$$

Lastly, while the optimal values of {a1, a2, a3, b1, b2} are dependent upon the precise noise and interference environment, it has been found that the following values for these parameters operate near optimal performance for the expected range of operating environments:

$$a_1 = \frac{1}{8}$$

$$a_2 = \frac{7}{32}$$

$$a_3 = \frac{5}{16}$$

$$b_1 = \frac{1}{8} \cdot k_{ADC}$$

$$b_2 = \frac{11}{32} \cdot k_{ADC}$$

The parameters $b_1$ and $b_2$ above are dependent upon another parameter, $K_{ADC}$. The new parameter, $k_{ADC}$, is dependent upon the value of receive channel analog to digital converter gain (Rx_AdcGain) used during the differential measurement step, as detailed in the table below:

| Rx_AdcGain<1:0> used during differential measurement step | $k_{ADC}$ |
|---|---|
| 00 | 1 |
| 01 | 3/4 |
| 10 | 1/2 |
| 11 | 3/8 |

These a and b coefficients should be programmable by a control source such as firmware that is part of the controller 104, but the default values should be those listed above. The table below indicates the suggested bit width for each coefficient:

| Coefficient | Bit width |
|---|---|
| $a_1$ | 5 |
| $a_2$ | 5 |
| $a_3$ | 5 |
| $b_1$ | 6 |
| $b_2$ | 8 |

The heatmap assembly blocks (HAB) 414, 420 take the step scan outputs from the scan data path 408 or differential combiners 412, 418, if used, and assembles the complete capacitive heatmap that is the major output of the frame scan operation. In order to do so, it may mathematically combine all of the step scan outputs in the appropriate manner to create estimates of the capacitance values of the individual capacitive pixels in the capacitive touch panel 102.

As shown in Figure 4, there are two separate and identical instantiations of the HAB. A first HAB 414 is for the I-channel data and a second HAB 420 is for the Q-channel data. Each HAB 414, 418 operates on the either the I-channel or Q-channel data in order to create either an I-channel or a Q-channel capacitive heatmap.

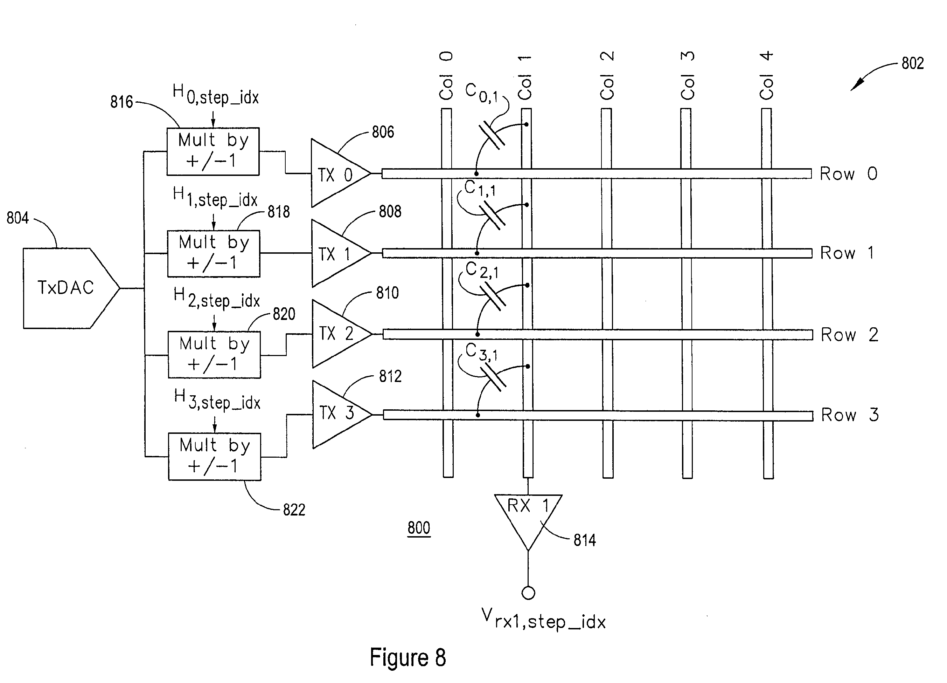

In order to demonstrate the mathematics that may apply for heatmap assembly, an example 4 x 5 capacitive touch panel 800 is illustrated in Figure 8. In this example, only the capacitive pixels in column 1 are analyzed, but the same principle can be easily extended to each of the five columns in the example capacitive touch panel 800. In particular, the output of receive column j is only affected by capacitance pixels in column j.

The example capacitive touch panel 800 includes a touch panel 802, a transmit digital to analog converter (TxDAC) 804, transmit buffers 806, 808, 810, 812, and a receive analog to digital converter 814. The transmit buffers 806, 808, 810, 812 each have an associated multiplier 816, 818, 820, 822, respectively. The multipliers 816, 818, 820, 822 operate to multiply the applied signal from the TxDAC by either +1 or -1.

In the example of Figure 8, a single TxDAC waveform is sent to all four transmit buffers 806, 808, 810, 812. However, each buffer multiplies this waveform by either +1 or -1 before transmitting it onto the row of the touch panel 802. For a given step scan (indicated by the subscript "step_idx"), each value of Hi,step_idx is held constant. But for subsequent step scans in the scan sequence, these values may change. Therefore, at a given step index, the voltage received at $m^{th}$ Rx channel is:

$$V_{step\_idx,m} = V_{TX} \cdot RxGain_m \sum_{n=0}^{NumRows-1} H_{n,step\_idx} \cdot C_{n,m}$$

where $V_{Tx}$ is the amplitude of the transmit signal and $RxGain_m$ is the gain of the receive channel m. In order to simplify the analysis, these two parameters are assumed to be equal to 1 and ignored in subsequent calculations.

As can be seen by this equation above, $V_{step\_idx,m}$ is based on $NumRows$ (e.g. 4) unknown values, $C_{n,m}$, with n = 0 to 3 in this example. Therefore, if four independent step scans are performed with four independent H sequences applied to the four transmit buffers 806, 808, 810, 812, the relationship between V and C can be inverted in order to estimate the C values from V. In matrix form, this can be written:

$$V_m = H \cdot C_m$$

$$V_m = \begin{bmatrix} V_{0,m} \\ V_{1,m} \\ \vdots \\ V_{NumSteps-1,m} \end{bmatrix}$$

$$H^{NumSteps,NumRows} = \begin{bmatrix} H_{0,0} & \cdots & H_{0,NumRows-1} \\ \vdots & \ddots & \vdots \\ H_{NumSteps-1,0} & \cdots & H_{NumSteps-1,NumRows-1} \end{bmatrix}$$

$$C_m = \begin{bmatrix} C_{0,m} \\ C_{1,m} \\ \vdots \\ C_{NumRows-1,m} \end{bmatrix}$$

In this formulation, the column vector $\mathbf{C_m}$ represents the capacitance of the capacitive pixels in the $m^{th}$ column of the capacitive touch panel. H is a NumSteps x NumRows matrix, where the $n^{th}$ column of the H-matrix represents the multiplicative sequence applied to the $n^{th}$ transmit row. The optional superscript of H indicates the dimensions of the H matrix. $\mathbf{V_m}$ is a column vector, where the $n^{th}$ entry in the matrix is the $n^{th}$ step scan output of $m^{th}$ RX channel.

In the present application, H is a special form of matrix, called a modified Hadamard matrix. These matrices have the property that:

$$H^T \cdot H = NumSteps \cdot I$$

where $\mathbf{I}$ is the NumRows x NumRows identity matrix, and $H^T$ is the transpose of H.

Given the formulation above, and the properties of the H-matrix, the relationship from $\mathbf{C_m}$ to $\mathbf{V_m}$ can be inverted in order to extract out the values of the $\mathbf{C_m}$ vector from the $\mathbf{V_m}$ measurements. Using the terminology defined above:

$$C_m = \frac{1}{NumSteps} H^T \cdot V_m$$

In the example above, the panel had four rows and the value of *NumSteps* (equivalently $N_{multi}$) was also set to four. Therefore, all panel rows were stimulated during every step scan. In general, the number of panel rows will be larger than the value of $N_{multi}$. In that case, the panel stimulation is broken up into blocks. During each block of $N_{multi}$ step scans, $N_{multi}$ adjacent rows are stimulated with the Hadamard polarity sequencing described above.

The heatmap assembly block 414, 420 works on each block of $N_{multi}$ scans independently in order to create the complete heatmap output. For instance, if there were twelve panel rows and $N_{multi}$ were set to four, then the first four step scans would be used to stimulate and assemble the first four rows of the capacitive heatmap; the next four step scans would be for the fifth through eighth panel rows; and the last four step scans would be for the ninth through twelfth rows. Therefore, for each block of $N_{multi}$ rows, the heatmap assembly block operates in the exact same manner as defined above. However, the outputs of the HAB 414, 420 are mapped to the subsequent rows in the complete capacitive heatmap.

The heatmap assembly block 414, 420 is capable of assembling a 32-column-wide heatmap, as there are a total of 32 receiver channels implemented in one embodiment. However, in many cases, the capacitive touch panel used will not have 32 columns, and hence not all 32 receive channels are used.

Mathematical extensions for asymmetric panel scanning

As described above, the controller 104 preferably has the capability to perform asymmetric panel scans, where the firmware supporting operation of the controller 104 has the capability to define the number of times each row is to be scanned. Given the formulation for asymmetric panel scanning outlined above, the changes to the heatmap assembly operation in order to support this feature are minimal.

As described above, the heatmap is assembled in a blocks of $N_{multi}$ rows. In asymmetric scanning, $N_{multi}$ can vary on a block-by-block basis. Therefore, the old equation of:

$$C_m = \frac{1}{NumSteps} H^T \cdot V_m$$

is still valid. However, with asymmetric scanning, the dimensions of C, V, and H and the value of NumSteps change on a block-by-block basis.

The I/Q combiner 422 shown in 4 is used to combine the I- and Q-channel heatmaps into a single heatmap. The primary output of the I/Q combiner 422 is a heatmap of the magnitude (e.g. Sqrt[$I^2+Q^2$]). This is the heatmap that is handed off to the touch back end 134.

The row/column normalizer 424 shown in Figure 4 is used to calibrate out any row-dependent or column-dependent variation in the panel response. The row/column normalizer 424 has two static control input vectors, identified as *RowFac* and *ColFac*. *RowFac* is an Nrow-by-1 vector, where each entry is 1.4 unsigned number (e.g. LSB = 1/16. Range is 0 to 31/16). *ColFac* is an Ncol-by-1 vector, where each entry has the same dimensions as *RowFac*.

If the input data to the Row/Column Normalizer block is labeled as *HeatmapIn(m,n)*, where m is the row index and n is the column index, the output of the block should be:

$$HeatmapOut(m,n) = HeatmapIn(m,n) \cdot RowFac(m) \cdot ColFac(n)$$

In one embodiment, the controller 104 has the capability to allow *RowFac* and *ColFac* to be defined either by OTP bits or by a firmware configuration file. The OTP settings will be used if the manufacturing flow allows for per-module calibration, thus enabling the capability to tune the controller 104 on a panel-by-panel basis. If *RowFac* and *ColFac* can only be tuned on a per-platform basis, then the settings from a firmware configuration file will be used instead.

Spectrum Estimation

The spectrum estimation preprocessor 432 operates to determine the background levels of interference that couple into the receive channels 406 so that the controller 104 may appropriately select transmit frequencies that are relatively quiet or interference free.

The spectrum estimation preprocessor 432 will generally only be used during SEM mode, so it is not part of the standard panel-scan methodology. Instead, the spectrum estimation preprocessor 432 will be used when conditions indicate that SEM should be invoked. At other times, the spectrum estimation preprocessor 432 can be powered down.

Baseline tracking and removal filter

A touch event should be reported when the measured capacitance of a capacitive pixel (or group of pixels) changes by a large enough amount in a short enough period of time. However, due to slow environmental shifts in temperature, humidity or causes of drift, the absolute capacitance of a pixel (or group of pixels) can change substantially at a much slower rate. In order to discriminate changes in pixel capacitance due to a touch event from changes due to environmental drift, a baseline tracking filter can be implemented to track the changes in the baseline (e.g. untouched or ambient value of the capacitance), and simple subtraction of the baseline capacitance from the input capacitance will yield the change in capacitance due to the touch event.

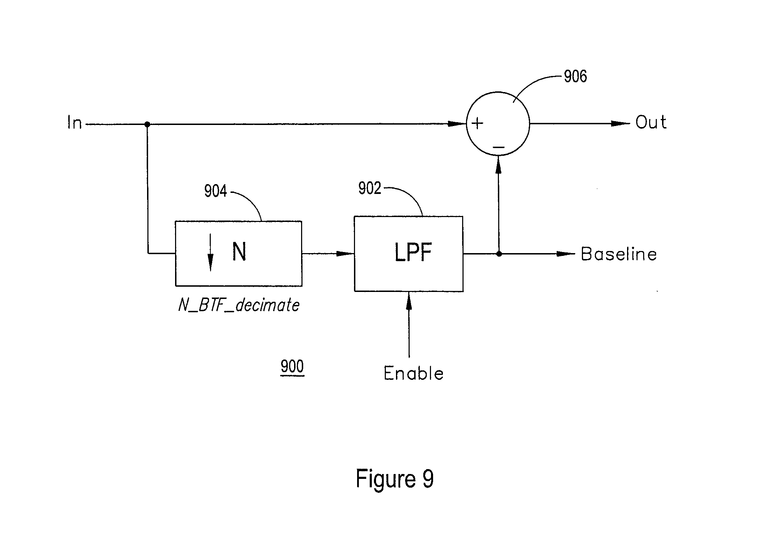

Figure 9 illustrates a baseline tracking filter 900. The filter 900 includes a low-pass filter (LPF) 902, a decimator 904 and a combiner 906. The input signal to the filter 900 is provided to the combiner 906 and the decimator 904. The output signal of the decimator is provided to the input of the LPF 902. The output of the LPF 902 is combined with the input signal at the combiner 906. The LPF 902 has an enable input for controlling operation of the filter 900.

The LPF 902 in the baseline tracking filter 900 is used to improve the estimate of the baseline capacitance value. One embodiment uses a simple finite impulse response (FIR) moving average filter of length N (also known as a comb filter), such as:

$$H_N(z) = \frac{1}{N} \cdot \frac{1 - z^{-N}}{1 - z^{-1}} = \frac{1}{N} \cdot \sum_{n=0}^{N-1} z^{-n}$$

Another embodiment a 1-tap infinite impulse response (IIR) filter, also referred to as a modified moving average, with response:

$$H_k(z) = \frac{\frac{1}{k}}{1 - \left(1 - \frac{1}{k}\right)z^{-1}}$$

The FIR embodiment of the filter 902 may be used upon startup and recalibration of the baseline value, as it can quickly acquire and track the baseline value. The IIR embodiment of the filter 902 should be used once the initial baseline value is acquired, as it can be a very computationally efficient means to implement a low-pass filter, particularly if k is chosen to be a power of 2. By increasing the value of k, one can set change the signal bandwidth of the filter to arbitrarily small values with minimal increase in computational complexity.

Filter 900 has two outputs, labeled Out and Baseline in Figure 9. The Baseline output is the estimate of the current baseline (aka ambient or untouched) capacitance of the particular panel pixel(s) being scanned, and the Out output is the baseline-corrected value of that capacitance measurement. The Out value is what should be used in the subsequent touch-detection logic.

The LPF 902 in Figure 9 has an input labeled Enable to receive an enable signal in order to shut down the LPF 902 when a potential touch event is detected. This is provided so that the baseline output is not corrupted by spurious data, most likely from a touch event. If the enable signal is low, the LPF 902 will hold its previous output without updating its output with the incoming data, effectively ignoring the incoming data. Once the enable signal is high, the LPF 902 will continue to update its output with the incoming data. Logic for generating the enable signal is detailed in the following equation:

$$Enable = (Out \leq PosLPFThresh) \,\&\&\, (Out \geq NegLPFThresh)$$

where *PosLPFThresh* and *NegLPFThresh* are configurable parameters.

In a mutual-capacitance scan mode, where a touch event causes a reduction in the input data, the *NegLPFThresh* should be set to $k_T*TouchThresh$, where $0<k_T<1$ and *TouchThresh* is the touch-detection threshold defined below.

Programmable update rate

The timescale of most baseline drift phenomena will be far slower than the frame rate of the touch panel scan. For instance, observed baseline drift devices had timescales on the order of 1 hour or longer, whereas the frame rate of a current device may be on the order of 200 frames/second. Therefore, in order to reduce the computation for baseline tracking, the controller circuit 104 shall have the capability to scale the update rate of the baseline tracking filter 900. The device may do this by using the decimator 904 to decimate the data fed to the filter 900, so that the filter 900 only operates on every $N\_BTF\_decimate$ frames of heatmap data, where $N\_BTF\_decimate$ is a programmable parameter. Therefore, the Baseline data in Figure 9 will update at this slower rate. However, the baseline corrected output data (Out in Figure 9) must be calculated for every frame.

Baseline tracking needs to exercise special care when spectrum estimation mode (SEM) is invoked. SEM may cause a configuration change in the analog front end which in turn will alter the gain in the transfer function (e.g. from capacitance values to codes) of the touch front end. This, in turn, may cause abrupt changes in the capacitive heatmap to occur that could be accidentally interpreted as touch or anti-touch events.

A touch event is detected when the baseline-corrected output exhibits a significant negative shift. The shift in this output may be larger than a programmable parameter, called *TouchThresh.* Furthermore, since the controller circuit 104 may scan a panel at upwards of 200Hz and a human finger or metal stylus moves at a much slower timescale, a programmable amount of debounce, dubbed *TouchDebounce,* should also be included. Therefore, before a touch is recognized, the output of the baseline filter may be more negative than *TouchThresh* for at least *TouchDebounce* frames. It is likely that TouchDebounce will be a small value, in order that the total touch response time is faster than 10ms.

Heatmap Noise Estimation

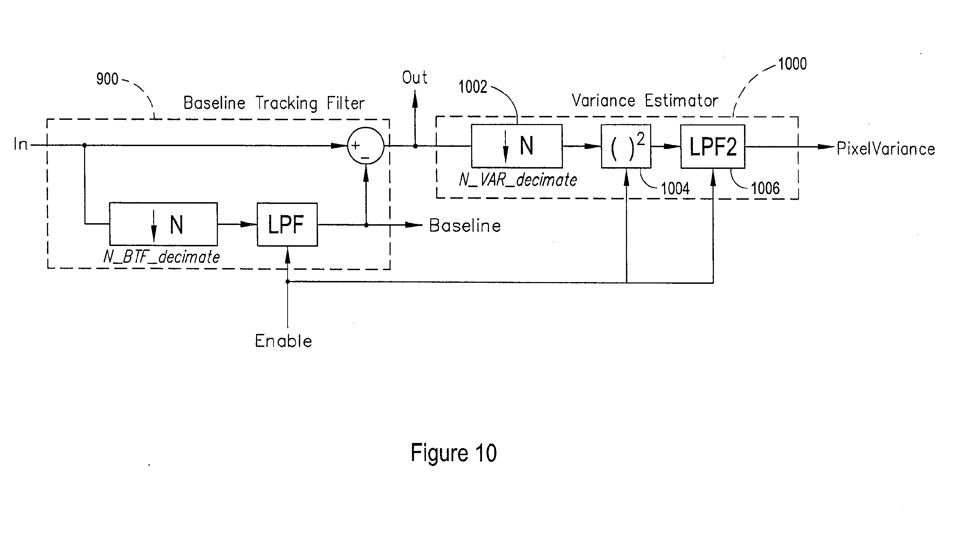

The touch back end 134 requires an estimate of the noise level in the capacitive touch panel 102 in order to properly threshold the touch blobs during the detection process. The noise level can be detected by observing noise at the output of the baseline tracking filter as shown in figure 10. Figure 10 shows a first variance estimator 1000 in conjunction with the baseline tracking filter 900 of Figure 9. In Figure 10, the baseline tracking filter 900 has its Out output coupled to an input of the variance estimator 1000. The variance estimator 1000 includes a decimator 1002, a signal squarer 1004 and a low-pass filter 1006. The variance estimator 1000 in this embodiment is simply a mean-square estimator, as the output of the baseline tracking filter 900 is zero-mean. Hence the mean-square is equal to the variance.

In order to lower the computational requirements for the variance estimator 900, the data entering the variance estimator can be decimated in the decimator 1002 by the factor, *N_VAR_decimate.* The low-pass filter 1006 in the variance estimator 1000 may either be a comb-filter or a modified-moving-average filter. The length of the response of the filter 1006 may be a programmable parameter, averaging data over as many as 100 or more frames. In order to lower memory requirements, the MMA filter may be preferred.

As with the baseline tracking filter 900, the LPF 1006 in the variance estimator 1000 has an input for an enable signal. The enable signal is low when the pixel in question is being touched. Otherwise, the variance estimate will be corrupted by the touch signal. When the enable signal is low, the LPF 1006 should retain state, effectively ignoring the data coming into the variance estimator 1000.

The output of the variance estimator 1000 is the variance of one single pixel in the capacitive touch panel 102. Therefore, this provides an independent variance estimate of each pixel in the panel. To get an estimate of the variance across the panel 102, the controller circuit 104 may average the per-pixel variances across the entire frame.

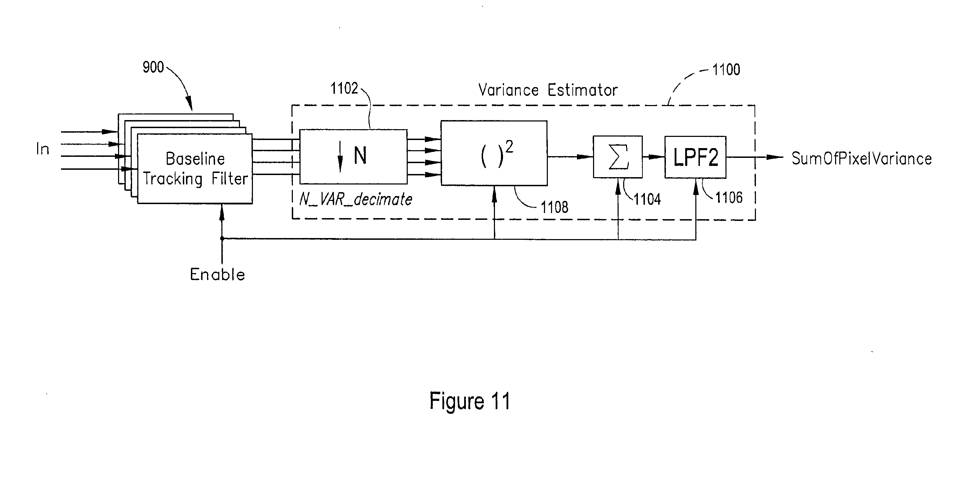

Alternately, if only a single per-frame variance estimate is needed, the controller circuit 104 can follow the approach shown in Figure 10. Figure 11 shows a second variance estimator 1100 in conjunction with the baseline tracking filter 900 of Figure 9. In Figure 11, all the per-pixel baseline tracking filters are grouped as baseline tracking filters 900, on the left in the figure. All the baseline-corrected outputs from the baseline tracking filters 900 are passed to the variance estimator 1100.

Like the variance estimator 1500 of Figure 15, the variance estimator 1600 includes a decimator 1602, a signal squarer 1608, a summer 1604 and a low-pass filter 1606. The variance estimator 1600 combines the outputs of the baseline tracking filters 900 into a single value by summing the baseline-corrected outputs across the entire frame in the summer 1604. This averaged value is then passed to the same square-and-filter estimator that was described above, formed by the signal squarer 1608 and the low-pass filter 1606. Assuming that the noise is uncorrelated from pixel-to-pixel, the output of the variance estimator 1600 is equal to the sum of all the pixel variances reported by the block diagram in Figure 4. In order to generate the average pixel variance across the panel, this result may be divided by the total number of pixels in the capacitive touch panel 102. To generate an estimate of the standard-deviation of the noise, the controller circuitry 104 may take the square root of the variance.

Fast Touch Detection

In mutual capacitive touch systems, such as that used by the portable device 100 of Figure 1, fast system response to a touch is required. Fast response may also be required to as short latency. Fast response is required in order to improve user experience and convenience. A faster-responding touch panel device eliminates a source of use frustration and confusion and may open up the portable device 100 to operation with different applications. For example, a gaming application that requires quick interaction from the user may only become possible if the portable device has low latency and responds to user touch quickly enough to properly engage the game. Next-generation capacitive touch panels must have reduced touch response time.

At the same time, low system power consumption is required. The portable device 100 is powered by a battery 114. For user convenience, long battery life, or longer time between recharging the battery, is highly preferable. To extend battery life, current drain is minimized in the circuits which form the portable device. One way to reduce current drain is to reduce power to or disable circuits and components which are not currently in use. Such circuits and components may be powered or enabled when use is required. A touch panel is only intermittently actuated by a user. Thus, the capacitive touch panel and its related components such as the controller circuit are good candidates for reduced power consumption by powering down or reducing active times.

One known and commonly used method to reduce system power is to reduce the frame rate at which the controller circuit scans the panel and develops the capacitive heatmap. This can be done by sensing when there is no activity and slowing down the scan rate. When new activity is detected on the surface of the touch panel, the controller circuit responds by increasing the frame rate to fully sense the new activity. After activity has ceased, the frame rate can be reduced again.

However, reducing the frame rate directly impacts the speed at which the controller circuit can respond to a touch event. If the controller circuit has slowed down the rate at which it can respond to a touch, there may be additional delay before the touch event is actually detected, the frame rate is normalized and normal processing can resume. Thus, conventional methods for reducing system power while providing fast touch response have been contradictory. What is needed is a solution that solves the problem by decoupling no-activity power consumption and touch response time.

Accordingly, the controller circuit 104 (Figure 1) provides a touch detection (TD) operating mode. TD mode is a reduced-performance mode that can detect the presence or absence of a touch impinging on a capacitive touch panel but cannot locate the position or positions of the touch on the capacitive touch panel. When there is no activity, the touch controller circuit 104 transitions into TD mode to save power. While in TD mode, the touch controller circuit 104 will periodically perform a touch detection scan instead of performing a full panel scan. Scans in TD mode can be performed very rapidly, so that duty cycling can be used to reduce power, while still maintaining fixed frame rates. The touch controller circuit 104 automatically detects whether a touch is present and, if there are no touches for a sufficient length of time, automatically transitions into TD mode. When in TD mode, the system automatically transitions back to normal operating mode once a touch is detected.

Implementing the controller circuit 104 with TD mode provides more flexibility and granularity to balance between power consumption and touch response time. When the touch controller circuit 104 transitions into TD mode, the touch detection scan rate can be configured independently of the normal scan rate. Thus, fine control between power consumption and response time can be achieved.

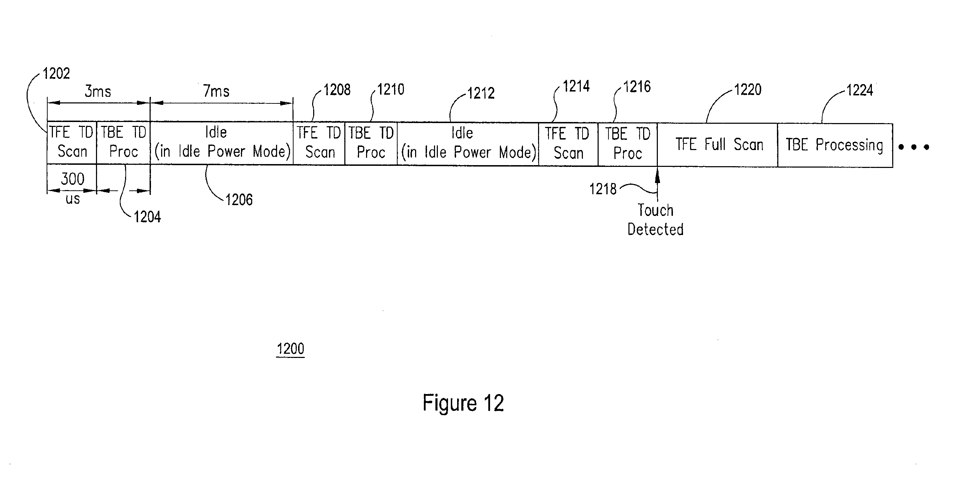

Figure 12 shows a timing diagram 1200 for a touch detection mode of operation for the portable device 100 of Figure 1. The timing diagram 1200 illustrates operation by the touch analog front end (TFE) 400 and touch back end (TBE) 134 described above in conjunction with Figure 4. The timing diagram 1200 reads from left to right.

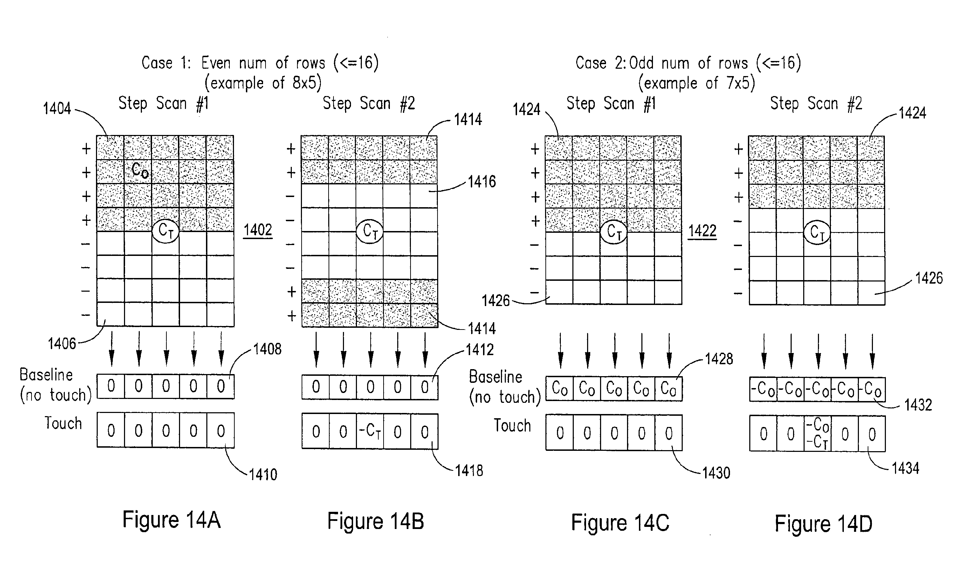

At the beginning of the timing diagram 1200, the controller circuit 104 is in touch detection mode. The controller circuit 104 periodically or intermittently performs a touch detection scan, as will be discussed in greater detail below in conjunction with Figure 14. The touch detection scan is performed by the TFE during a first scan time 1202. In Figure 12, the duration of the touch detection scan is shown as 300 microseconds. However, that time duration is exemplary only. A greater time or shorter time may be required for the touch detection scan.

Following the touch detection scan by the TFE, the TBE processes the scan output during a second time period 1204. Processing generally involves data processing to determine if a touch has occurred. For example, the TFE produces a capacitive heatmap for the touch panel. A baseline capacitance value is subtracted from the capacitive heatmap to determine if the capacitance has changed significantly. If so, a touch event is detected. In Figure 12, the first time period 1202 and the second time period 1204 are shown as having a duration of 3 milliseconds. This time is exemplary only.

In the timing diagram 1200, no touch event is detected during the second time period 1204 so during a subsequent third time period 1206, the controller circuit enters a low power idle mode. In this mode, any inactive circuits may be powered down to conserve power in the batter which powers the device. A timer may be operated to time the duration of the low power idle mode. In Figure 12, the low power idle mode is shown as having a duration of 7 milliseconds. This time is exemplary only.

At the expiration of the third time period 1206, the controller circuit again performs a touch detection scan during time period 1208. Following the scan, during time period 1210, the TBE processes the scanned data, then during time period 1212, the controller circuit again enters the low power mode. In Figure 12, the repetition of the TD scan, processing and idle mode are shown as being periodic. However, this is not necessary and any convenient timing arrangement may be used to meet the dual goals of fast response time and low power.

At time period 1214, the controller circuit performs another touch detection scan. Subsequently, during time period 1216, the controller circuit performs back end processing of the heatmap data. However, at time 1218, a touch is detected, based on variation in the capacitance measured during the touch scan and processing.

The touch detection scan only indicates that a potential touch has occurred. The touch detection scan does not locate the touch on the capacitive touch panel. No pixel information is available and no indication of the validity of the touch is available. The potential touch could be an actual touch, it could be a false touch, as when the panel brushes against a conducting element, or it could be a multiple touch, such as by several fingers of a user. The touch detection scan only indicates that capacitance on the panel has varied significantly and should be further investigated.

Accordingly, because a touch event was detected at time 1218, at time 1220, a full scan is performed by the touch front end. During a full scan, all rows and columns of the touch panel are stimulated and sensed to verify that the panel was actually touched and to identify the location of the touch or touches. Following the touch detection scan, during time 1222, the controller circuit back end processes the heat map data in order to fully analyze the state of the capacitive touch panel.

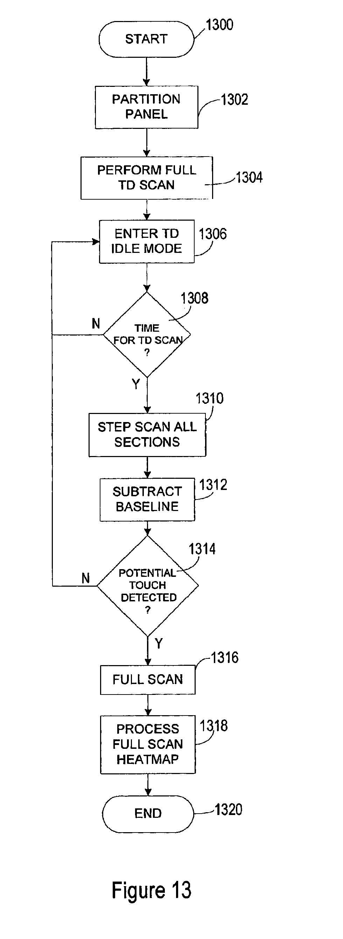

Figure 13 is a flow diagram illustrating the touch detection mode of operation of the portable device of Figure 1. The method begins at block 1300. At block 1302, the touch panel is partitioned. Based on the panel size, in particular, the total number of rows, the panel is partitioned for scanning. Scanning is described below in conjunction with Figure 14. Preferably, the touch panel is divided into two partitions of approximately equal number of rows. Rows are determined by the number of transmitters. As noted above in connection with the exemplary embodiment of Figure 4, the AFE 132 includes 48 physical transmit channels and 32 physical receive channels. The transmit channels are arranged along the rows of the touch panel 102 and the receive channels are arranged along the columns of the panel 102. The intersection of each row and column defines a pixel of the panel 102. Other configurations may have differing numbers of rows and columns or may associate transmitters with columns and receivers with rows, but the principles described herein may be readily extended. The partitioning of block 1302 may be done one time or may be defined by firmware that supports the controller circuit 104 operation.

At block 1304, a full touch detection scan is performed. Touch detection scanning is described below in more detail in conjunction with Figure 14. A full scan is performed prior to entering touch detection scan mode in order to obtain the touch detection baseline. The baseline or baseline capacitance is a measure of the nominal or untouched capacitance for the touch panel. It is used by the touch back end to determine if a touch event has occurred. A capacitance heatmap produced by a touch detection scan is compared with the baseline, for example, by subtracting the baseline capacitance values pixel-by-pixel from the heatmap values. The baseline value is stored for subsequent use.

At block 1306, the controller circuit 104 enters idle scan mode. In this mode, non-essential circuits, components and processes of the controller circuit 104 are powered down. Components and processes which are required for operation, such as a timer, are maintained with power. Other circuits or processes that may improve performance of the controller circuit 104 may be maintained with power as well so that a tradeoff between low power operation and high performance can be made.

At block 1308, it is determined if a touch detection scan should be performed. Scanning is described below in conjunction with Figure 14. The determination of block 1308 may be made in any suitable manner, such as by setting a timer to count down a predetermined time. The time may be a set duration or may be varied depending on design or performance requirements. If a touch detection step scan is not due, control returns to block 1306 and the controller circuit 104 remains in idle mode.

At block 1310, if it was determined that a touch detection scan should be performed, a step scan is performed of all sections of the touch panel. Sections are defined as in block 1302, described above. The result of the scan operation is data defining a capacitive heatmap of the touch panel.

At block 1312, the baseline value is subtracted from the heatmap determined at block 1310. If no touch event has occurred, the result of the subtraction of block 1314 will be approximately zero. With no touch present or other variation, the capacitance of the panel will be approximately the baseline value. Accordingly, in that case, at block 1314, the controller circuit 104 determined that no potential touch has been detected control returns to block 1306 and touch detection idle mode is resumed.

On the other hand, if it is determined that a potential touch has been detected, at block 1316 a full scan is conducted of the touch panel. This can occur if, during any step scan of any partition a potential touch was detected. Or this can occur if potential touch is detected after performing all step scans of a touch detection routine. Since faster response is generally preferred, touch scanning is preferably interrupted as soon as a potential touch is detected and a full scan begun. The full scan involves stimulating all rows of the touch panel and detecting the response at all columns. This produces a full heatmap of the touch panel.

At block 1318, the heatmap produced by the full scan is processed. The result is a determination of the occurrence of any touch event at any pixel of the touch panel. In this manner, the potential touch can be verified as an actual touch event. Further, the location or locations of the touch event on the panel may be determined with precision. Process ends at block 1320 and the potential touch event can be further processed.

Figure 14 shows touch detection scanning of a sample scan map 1402 of the portable device of Figure 1. Figures 14(a) and 14(b) illustrate step scans for a first exemplary touch panel. In Figures 14(a) and 14(b), the scan map has an even number of rows. Specifically, in this example, the scan map has 8 rows and 5 columns.

The scan map is partitioned for scanning in order that any touch will be detected, even if the location of the touch cannot be determined. Figure 14(a) shows partitioning for a first step scan of the scan map 1402. A first partition 1404 includes the upper four rows. A second partition 1406 includes the lower four rows. Thus, the first portion 1404 and the second portion 1406 are complementary in that they together include all rows of the scan map 1402 with no overlap or minimal overlap. Each pixel, at the intersection of a row and a column, has a baseline capacitance of $C_0$. During the first step scan, the rows of the first partition 1404 are stimulated with a first signal, indicated by plus signs in Figure 14(a), and the rows of the second partition 1406 are stimulated with a second signal, indicated by minus signs in Figure 14(a). The stimulus signal could be a sine wave or a square wave. The plus signed and the minus signed signals are synchronized but with opposite phase or 180 degrees phase shift. The capacitance measured where a touch occurs is $C_T$. The first signal and the second signal are complementary so that, if no touch capacitance is present, the resultant scanned signal for each column will be zero or close to zero in value. This is indicated at the bottom of Figure 14(a), where the no-touch or baseline values 1408 for each column are detected as zero values for each column. Signal values due to the + signal effectively cancel signal values for the - signal.

If a touch occurs in one of the rows of either the first partition 1404 or the second partition 1406, the capacitance will vary from the baseline value and be detected for the associated column. The detected value will be added to or subtracted from the baseline value and this variation will be detected. Instead of the baseline value, a value of $+C_T$ or $-C_T$ will be detected, where CT is the capacitance variation due to a touch.

However, if the touch occurs in both the first partition 1404 and the second partition 1406, the capacitance variation may not be detected. In Figure 14(a), the touch occurs on the line between the first partition 1404 and the second partition 1406 at the location labeled $C_T$. When the touch panel is stimulated with the + signal to the first partition 1404 and the - signal to the second partition 1406, the changes in capacitance in the respective partitions will cancel so that the touch values 1410 shown for each column sum to zero for all columns. Since there is no variation from the baseline values 1408, the touch at the location in Figure 14(a) will not be detected.

To accommodate this, a second step scan is performed with the scan map 1402 partitioned as shown in Figure 14(b). The baseline values 1412 are shown at the bottom of Figure 14(b) and are all zero values for all columns. In Figure 14(b), the first partition 1414 includes the top two rows and the bottom two rows. The second partition 1406 includes the middle four rows. During the second step scan, the rows of the first partition 1414 are stimulated with a first signal, labeled + in Figure 14(b) and the rows of the second partition 1416 are stimulated with a second signal, labeled - in Figure 14(b). During this scan, the touch at the location labeled $C_T$ is solely in the rows of the second partition 1416. No rows of the first partition 1414 are subjected to a touch. As a result, the touch values 1418 are zero values except in the column where the touch event occurred. For that column, the detected value is $-C_T$.

Figures 14(c) and 14(d) illustrate step scans for a second exemplary touch panel. In Figures 14(c) and 14(d), the scan map 1422 has an odd number of rows. Specifically, in this example, the scan map 1422 has 7 rows and 5 columns. The scan map 1422 is partitioned into a first partition 1424 and a second partition 1426. The first partition 1424 includes the upper four rows. The second partition 1426 includes the lower three rows. Thus, the first partition 1424 and the second partition 1426 are complementary in that they together include all rows of the scan map 1422 with no overlap or minimal overlap. In this example, only one row overlaps or is common to both the first partition 1424 and the second partition 1426. During a first step scan, the common row is supplied with the + signal and during the second step scan, the common row is supplied with the - signal. This overlapping of the partitions 1424, 1426 of the scan map 1422 ensures to a touch anywhere on the scan map is detected, even a touch such as at the location indicated by the label $C_T$ in Figure 14(c) and 14(d).

The baseline values 1428 for the scan map 1422 are shown at the bottom of Figures 14(c) and 14(d). For Figure 14(c), the baseline values have a value of $C_0$ for all columns. Four rows of the first partition 1424 are stimulated with the + signal; three rows of the second partition 1426 are stimulated by the - signal, summing to a $+ C_0$ value as shown. When a touch occurs at the location labeled $C_T$ in Figure 14(c), the touch values 1430 are unchanged so that the touch cannot be detected relative to the baseline value.

Figure 14(d) shows partitioning for a second step scan. In Figure 14(d), the first partition 1424 includes the top three rows and the second partition 1426 includes the bottom four rows. During the second step scan, the first partition 1424 is stimulated with the + signal and the second partition is stimulated with the - signal. The baseline values 1432 are shown at the bottom of Figure 14(d) and each have a value of $-C_0$. On this second step scan, the touch at the location labeled $C_T$ in Figure 14(d) produces a sensed value of $-C_0 - C_T$ as shown by touch values 1434.

Accordingly, by partitioning the scan map for the touch panel and selectively stimulating partitions of the scan map, a touch event at any area of the scan map can be detected. When the touch event is detected, a full scan may be initiated to locate the touch on the touch panel.

The exemplary scan maps 1402, 1422 of Figure 14 can be readily extended to other panel sizes as well. For example, a panel with an even number of rows, as in Figure 14(a) can be partitioned into two equal sized partitions, up to a panel sized with the same number of rows as receiver circuits or transmitter circuits in the AFE. Each row should be stimulated simultaneously and each column should be sensed simultaneously. In one embodiment, this specific AFE can support up to sixteen simultaneously stimulated transmitters so that the maximum partition size is sixteen rows for each step scan. Other embodiments may be sized or partitioned differenty while employing similar concepts.

For panels having more than sixteen rows, the panel may be partitioned into two sections. For a panel with N rows, the partitioning may be done according to the relation

$$16 + 2k = N$$

Then, the first partition has 16 rows and the second partition has 2k rows. k should be equal to or larger than 2 and this may affect the partitioning of the panel. In the case where the first partition is assigned 16 rows and causes k to be 1, then the first partition should be reduced in size to 14 or fewer rows so that k = 2 or greater.

For panels larger than 16 rows but with an odd number of rows, the partitioning process can be extended as well. Again, the panel scan map should be partitioned into two sections, for the odd row embodiment, using the following relation:

$$16 + 2k - 1 = N$$

In this example, the first partition has 16 rows and the second partition has 2k -1 rows. Again, k should be greater than or equal to 2 and this may affect the size of the first partition. If the first partition has 16 rows and causes k to be 1, then the first partition should be reduced to 14 or fewer rows so that k=2 or greater.

It should be further noted that any suitable partitioning method may be used. The partitioning illustrated in Figure 14 is efficient because it minimizes overlap of rows in respective partition. There is generally either no overlap or a minimal overlap to ensure that all rows are uniquely scanned and no rows are missed and so that any touch overlapping two rows is detected. The same principles apply no matter how a touch panel may be partitioned or stimulated.

From the foregoing, it can be seen that the present invention provides an improved method and apparatus for touch detection in a touch panel control system. A touch detection mode is introduced to detect the absence or presence of a touch event of the touch panel. The touch detection scan does not provide the location of the touch but just its occurrence. If a touch event is detected, a full panel scan is performed to locate and respond to the touch event. If no touch event is detected, the touch controller transitions to a low power idle mode to reduce current drain and extend battery life. While in the touch detection mode, the touch controller will perform a touch detection scan periodically. The touch detection scan is done relatively quickly of all rows to detect the presence or absence of a touch event. Two step scans are performed to ensure that no touch events are missed but to keep the scan duration and power dissipation low. The touch panel is partitioned for the two scans to ensure that all areas of the panel are covered by the scan and no overlapping touch event is missed. The partitioning and scan techniques may be extended to panels of all sizes. In this way, the benefits of high performance, quick response, low latency and reduced power consumption may be combined in touch panel applications.

The methods, devices, and logic described above may be implemented in many different ways in many different combinations of hardware, software or both hardware and software. For example, all or parts of the system may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. All or part of the logic described above may be implemented as instructions for execution by a processor, controller, or other processing device and may be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, may include a storage medium and computer readable instructions stored on the medium, which when executed in an endpoint, computer system, or other device, cause the device to perform operations according to any of the description above.

The processing capability of the system may be distributed among multiple system components, such as among multiple processors and memories, optionally including multiple distributed processing systems. Parameters, databases, and other data structures may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library, such as a shared library (e.g., a dynamic link library (DLL)). The DLL, for example, may store code that performs any of the system processing described above. While various embodiments of the invention have been described, it will be apparent to those of ordinary skill in the art that many more embodiments and implementations are possible within the scope of the invention. Accordingly, the invention is not to be restricted except in light of the attached claims and their equivalents.

**Claims**

1. A method for touch detection in a touch panel, the method comprising:

   entering a low power touch detection mode;
   intermittently, stimulating the touch panel with signals to determine if any touch event occurs on the touch panel without locating the touch event on the touch panel; and
   if a touch event is detected, entering a full scan mode to locate the touch event on the touch panel; otherwise, if no touch event is detected, entering a low power idle mode for a predetermined time.

2. The method of claim 1 wherein stimulating the touch panel display comprises:

   during a first step scan, providing a first set of stimulus signals to a first portion of the touch panel; and
   during a second step scan, providing a second set of stimulus signals to a second portion of the touch panel, the second set of stimulus signals being complementary to the first set of signals so that a touch event may be detected.

3. The method of claim 2 further comprising:

   entering a low power touch detection mode, performing a baseline scan to obtain baseline capacitance values for each of the first step scan and the second step scan;
   after each of the first step scan and the second step scan, comparing step scan capacitance values due to the respective stimulus signals with the baseline capacitance values; and
   determining if a touch event is detected based on the comparison.

4. The method of any preceding claim wherein stimulating the touch panel display comprises:

   providing the first set of stimulus signals and the second set of stimulus signals along respective predetermined rows of the touch panel;
   sensing signals indicative of capacitance along columns of the touch panel; and
   based on the sensed signals, determining if a touch event is detected.

5. The method of any preceding claim wherein duration of the low power idle mode is selectable to balance power dissipation and response time to a touch event.

6. A method for a touch panel, the method comprising:

   when no touch activity is detected for the touch panel, periodically performing a touch detection scan of the touch panel; and
   when the touch detection scan produces an indication of touch activity, performing a full scan of the touch panel to locate the position of the touch activity on the touch panel.

7. The method of claim 6 further comprising:

   when no touch activity has been detected for a predetermined period of time, entering a touch detection mode of operation; and
   when in the touch detection mode of operation, if a new indication of touch activity is detected, exiting the touch detection mode.

8. A touch panel controller circuit comprising:

   an analog front end to stimulate selected rows of a touch panel and sense panel response to the stimulation; and
   a scan controller coupled with the analog front end and configured to control the analog front end to periodically stimulate predetermined rows of the touch panel with a touch detection scan procedure and, in response to an indication of no touch activity, enter low power mode and intermittently stimulate the predetermined rows of the touch panel with subsequent touch detection scans until a touch activity has been detected.

9. The touch pad controller circuit of claim 8 wherein the scan controller is further configured to respond to detection of activity by controlling the analog front end to stimulate all rows of the touch panel to locate the touch activity on the touch panel.

10. The touch pad controller circuit of claim 8 or 9 further comprising stored data to control the scan controller to identify as the predetermined rows of the touch panel a first partition having a first subset of rows of the touch panel and a second partition having a second subset of rows of the touch panel, the first subset of rows and the second subset of rows being selected to ensure that all areas of the touch panel are stimulated during the touch detection scan procedure.

11. The touch pad controller circuit of any of claims 8 to 10 wherein the analog front end is responsive to the scan controller to provide first stimulus signals to a first subset of rows of the touch panel and provide second stimulus signals to a second subset of rows of the touch panel.

12. The touch panel controller circuit of claim 11 wherein the analog front end is configured to sense signals produced on columns of the touch panel in response to the first stimulus signals and the second stimulus signals.

13. The touch panel controller circuit of claim 12 wherein the analog front end comprises analog to digital converter circuits to produce digital data based on the sensed signals and further comprising a circuit to subtract baseline capacitance data from the produced digital data to detect touch activity on the touch panel.

14. The touch panel controller circuit of any of claims 11 to 13 wherein the analog front end is responsive to the scan controller to provide a second stimulus signal that is complementary to a first stimulus signal so that the simultaneous provision of the first stimulus signal and second stimulus signal produce substantially no variation from a baseline level unless a touch activity is present on the touch panel.

15. The touch panel controller circuit of any of claims 8 to 14 wherein the touch panel is arranged in a predetermined number of rows and a predetermined number of columns and wherein the scan controller is configured to determine touch panel partitioning and touch panel driving patterns based on the predetermined number of rows and the predetermined number of columns.

CAPACITIVE TOUCH PANEL — 102

104

120 132 134

TFE TBE

130 DIGITAL TOUCH SYSTEM

TIMING

114

122 BATT

124 ROM

PROCESSOR

126 RAM

128 TEST

100

108 I/O

106 112

HOST PROCESSOR LCD

110 MEM

Figure 1

Figure 2A

Figure 2B

Figure 3

Figure 4

132

Touch Panel

102

AFE

400

402 TX

406 RX

404 Waveform generator (DDFS)

TxDAC

DDFS params

RxADC

408 I/Q Scan Datapath

I results
Q results

Step control

428 Rx Ctrl Crossbar Mux

430 Tx Ctrl Crossbar Mux

Rx Step Control
Tx Step Control

426 Scan Controller

Start

Step control

High – level control

410 Rx Data Crossbar Mux

Rx Data Crossbar Mux

416 Differential Combiner

418 Differential Combiner

412

414 I–Channel Heatmap Assembly

420 Q–Channel Heatmap Assembly

422 I/Q combiner

Abs(Heatmap)

424 Row/Col Norm'lzr

Abs(Heatmap)

134 TBE

432 Spectrum Estimation Preprocessor

Spectrum Estimate (autocorrelation waveform)

Figure 5

500

Column Index

| | 0 | 1 | 2 | 3 | 4 |
|---|---|---|---|---|---|
| 7 | 4 | 4 | 4 | 4 | 4 |
| 6 | 4 | 4 | 4 | 4 | 4 |
| 5 | 4 | 4 | 4 | 4 | 4 |
| 4 | 4 | 4 | 4 | 4 | 4 |
| 3 | 2 | 2 | 2 | 2 | 2 |
| 2 | 2 | 2 | 2 | 2 | 2 |
| 1 | 2 | 2 | 2 | 2 | 2 |
| 0 | 2 | 2 | 2 | 2 | 2 |

Row Index

|  | 0 | 1 | 2 | 3 | 4 |
|---|---|---|---|---|---|
| 0 | 2 | 2 | 2 | 2 | 2 |
| 1 | 2 | 2 | 2 | 2 | 2 |
| 2 | 2 | 2 | 2 | 2 | 2 |
| 3 | 2 | 2 | 2 | 2 | 2 |
| 4 | 2 | 2 | 2 | 2 | 2 |
| 5 | 4 | 4 | 4 | 4 | 4 |
| 6 | 4 | 4 | 4 | 4 | 4 |
| 7 | 4 | 4 | 4 | 4 | 4 |

Row Index

Column Index

600

Figure 6

Figure 7

Figure 8

Figure 9

Enable

900

N_BTF_decimate

↑ N

904

LPF

902

Baseline

Out

906

In

EP 2 613 221 A2

30

Figure 10

Figure 11

1202

3ms 7ms 1208 1210 1212 1214 1216 1220 1224

| TFE TD Scan | TBE TD Proc | Idle (in Idle Power Mode) | TFE TD Scan | TBE TD Proc | Idle (in Idle Power Mode) | TFE TD Scan | TBE TD Proc | TFE Full Scan | TBE Processing |

300 us

1204

1206

1218

Touch Detected

1200

Figure 12

Figure 13

EP 2 613 221 A2

Case 1: Even num of rows (<=16)
(example of 8x5)

Step Scan #1

1404

+
+
+
+ $C_O$
−
− $C_T$
−
−

1406

1402

Baseline
(no touch)

1408

| 0 | 0 | 0 | 0 | 0 |

1410

Touch

| 0 | 0 | 0 | 0 | 0 |

**Figure 14A**

Step Scan #2

1414

+
+
−
−
−
−
+ $C_T$
+

1416

1414

| 0 | 0 | 0 | 0 | 0 |

1412

| 0 | 0 | $-C_T$ | 0 | 0 |

1418

**Figure 14B**

Case 2: Odd num of rows (<=16)
(example of 7x5)

Step Scan #1

1424

+
+
+
+
− $C_T$
−
−

1426

1422

Baseline
(no touch)

1428

| $C_O$ | $C_O$ | $C_O$ | $C_O$ | $C_O$ |

1430

Touch

| 0 | 0 | 0 | 0 | 0 |

**Figure 14C**

Step Scan #2

1424

+
+
+
− $C_T$
−
−
−

1426

| $-C_O$ | $-C_O$ | $-C_O$ | $-C_O$ | $-C_O$ |

1432

| 0 | 0 | $\begin{matrix}-C_O\\-C_T\end{matrix}$ | 0 | 0 |

1434

**Figure 14D**

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61584454 A
- US 61584494 A